# EUROPÄISCHE PATENTSCHRIFT

(11) **EP 0 528 315 B1**
(45) Veröffentlichungstag und Bekanntmachung des Hinweises auf die Patenterteilung: **22.02.1995**
(21) Anmeldenummer: 92113579.4
(22) Anmeldetag: 10.08.1992
(51) Int. Cl.: B29C 45/27

(54) **Heisskanaldüse**
Hot runner nozzle
Buse à canal chaud

(30) Priorität: 16.08.1991 DE 4127036
(43) Veröffentlichungstag der Anmeldung: 24.02.1993
(73) Patentinhaber: Dipl.-Ing. Herbert Günther Gesellschaft mbH, A-2380 Perchtoldsdorf (AT)
(72) Erfinder: Günther, Herbert, Dipl.-Ing., W-3559 Allendorf/Eder (DE)
(74) Vertreter: Olbricht, Karl Heinrich, Dipl.-Phys.

(56) Entgegenhaltungen:
- EP-A- 0 382 257
- WO-A-91/13742
- DE-U- 9 003 574
- FR-A- 2 629 011
- PLASTVERARBEITER Bd. 37, Nr. 4, April 1986, SPEYER/RHEIN DE Seiten 124 - 127 LÖHL, GROSSMANN 'Stirnseitiger Mehrfachanschnitt als Problemlösung'
- PLASTVERARBEITER Bd. 40, Nr. 4, April 1989, SPEYER/RHEIN DE Seiten 76 - 77, XP000083976 EMMERICHS 'Umfassendes Paket für angussminimiertes Spritzgiessen' Thermoplay Typ D 6/5

## Beschreibung

Die Erfindung betrifft eine Heißkanaldüse gemäß dem Oberbegriff von Anspruch 1.

Eine solche Heißkanaldüse ist aus DE-U-90 03 574 bekannt.

Solche Düsen dienen dazu, eine Kunststoffschmelze von der Spritzgießmaschine bis zum Anspritzpunkt im Werkzeug zu leiten. Dazu muß die thermoplastische Masse im Strömungskanalsystem flüssig bzw. fließfähig gehalten werden; sie muß anschließend in der Form erstarren können. Das hierdurch bedingte Temperaturgefälle verlangt eine geschickte Verfahrensführung, um den notwendigen Energieaufwand zu minimieren.

Es gibt bereits Heißkanaldüsen, die am unteren Ende mit mehreren Düsenspitzen versehen sind, um entweder einen Artikel von verschiedenen Stellen her anzuspritzen oder mehrere Artikel gleichzeitig herzustellen. Je zwei bis vier Spitzen werden herkömmlich parallel oder unter 45° zur Achse eines die Heißkanaldüse durchsetzenden Materialrohrs in ein Fußstück eingesetzt.

In DE-U-90 03 574 ist eine Heißkanaldüse beschrieben, die in ein aktives und ein passives Bauelement unterteilt ist, nämlich in einen inneren Düsenkörper mit Ansatz und in eine äußere Halterung mit radialen Leitspitzen, die nur zur seitlichen Abstützung und Ringspalt-Bildung am Angußpunkt dienen. In der Praxis hat sich gezeigt, daß bei einer solchen Konstruktion ein Eindringen vom Kunststoff in den Fügespalt allgemein nicht vermeidbar ist. An der Verbindungsstelle tritt eine unkontrollierte Wärmeisolierung auf, die den Wärmetransport von dem aktiven Düsenkörper zum Angußbereich behindert, und zwar trotz wärmeleitender Ausbildung der passiven Leitspitzen. Überdies sind selbst bei verschiebbar angeordneten Düsenspitzen herkömmlich nur Anwendungen möglich, die in bezug auf den Teilkreisdurchmesser nach unten hin begrenzt sind, um die Montage noch ausführen zu können.

Die bisherigen Heißkanaldüsen dieser Typen sind in thermischer Hinsicht allgemein verbesserungsbedürftig. Es ist ein wichtiges Ziel der Erfindung, unter Überwindung der Nachteile des Standes der Technik eine Heißkanaldüse der genannten Art so weiterzubilden, daß nicht nur möglichst einfacher Aufbau und damit wirtschaftliche Fertigung sowie Montage gewährleistet sind, sondern auch einwandfreie Artikel in besonders kostengünstigem Betrieb erzeugt werden können.

Eine Lösung dieser Aufgabe ist in Anspruch 1 angegeben. Ausgestaltungen sind Gegenstand der Ansprüche 2 bis 14.

Bei einer Heißkanaldüse zur Verwendung in einer Spritzgießvorrichtung, deren Gehäuse eine Formnestplatte sowie einen Formeneinsatz aufweist, bestehend aus einem mit elektrischen Anschlüssen versehenen breiteren Flanschkörper und einem schmaleren Schaft, welcher im Gehäuse gehaltert ist, in den Formeneinsatz ragt und mit wenigstens einer Düsenspitze versehen ist, die in einem Winkel zur Achse eines Flanschkörper und Schaft durchsetzenden, außenbeheizten Materialrohrs nach außen gerichtet ist, wobei der Schaft einen hochfesten Endteil aufweist in den die bzw. jede Düsenspitze wärmeleitend einsetzbar ist, sieht die Erfindung vor, daß der Endteil von einem thermischen Trennkörper fortgesetzt ist, an welchen wiederum ein hochfestes, gut wärmeleitendes Bauelement anschließt.

Der mit Düsenspitzen versehene Schaft ist also hinsichtlich seiner Wärmeeigenschaften mehrstufig ausgebildet, indem seine Gestaltung zwischen den heißen Düsenspitzen und dem Düsenschaft, der am verhältnismäßig kalten Werkzeug anliegt und den Düsenkörper darin haltert, eine thermische Trennung herbeiführt. Man erkennt, daß die Verwendung des jeweils mit wärmeleitenden Bauteilen verbundenen Trennkörpers den Wärmeübergang dazwischen weitestgehend abblockt, so daß die Düsenspitzen heiß bleiben und nur geringe Wärmemengen an das Gehäuse abfließen können. Über diese thermodynamischen Vorteile hinaus erzielt man dadurch auch eine höhere Qualität der erzeugten Kunststoff-Artikel.

Am vorderen bzw. unteren Ende konzentriert man üblicherweise die Heizleistung durch spezielle Ausbildung der Heizeinrichtung, die etwa ein geschlitztes Heizrohr oder eine ungleichförmige Heizwicklung sein kann. Das untere Ende der das Materialrohr dicht umschließenden Heizeinrichtung ist gemäß Anspruch 2 wärmeleitend mit einem Wärmeleitelement verbunden, so daß der Düsenspitze in jedem Falle ausreichend Energie zugeführt wird, um die Materialschmelze heiß an den Anspritzpunkt zu bringen.

Laut Anspruch 3 weist der Schaft ein Hüllrohr, eine damit verschweißte Trennhülse und einen insbesondere ringförmigen Fuß auf, an dem die bzw. jede Düsenspitze befestigbar ist. Dieser Aufbau ist mechanisch einfach und auch bei hohen Spritzdrücken, die im üblichen Bereich zwischen 300 bar und 2.000 bar liegen können, völlig betriebssicher.

Eine wichtige Maßnahme besteht nach Anspruch 4 darin, daß das Wärmeleitelement eine metallische Buchse ist, deren unterer Teil an das untere Ende des Materialrohrs sowie der Heizeinrichtung formschlüssig anschließt und seinerseits vom Fußring formschlüssig übergriffen wird. Dadurch ist eine hochfeste Konstruktion geschaffen, die allen mechanischen und thermischen Beanspruchungen standhält.

In seinem oberen Bereich ist das Wärmeleitelement laut Anspruch 5 von dem thermischen Trennkörper und von der Heizeinrichtung wärmeisoliert, insbesondere durch Luftspalte. Dabei kann gemäß Anspruch 6 vom unteren Ende des Wärmeleitelements ausgehend wenigstens ein sich nach oben erweiternder Konusspalt vorhanden sein.

Um den Wärmeübergang auf das Hüllrohr des Schafts weiter herabzusetzen, kann nach Anspruch 7 zwischen dem oberen Ende des Wärmeleitelements und dem thermischen Trennkörper eine höchstens mäßig wärmeleitende Ringabstützung angeordnet sein, die zwischen Stirnflächen des Wärmeleitelements und der Trennhülse sitzt und aus einem Material niedriger Wärmeleitfähigkeit besteht, etwa aus Keramik, Titan, Chrom-Nickel-Stahl o.dgl.

Zur Verbesserung der Isolierung trägt es ferner bei, wenn der Schaft gemäß Anspruch 8 zumindest im Bereich seines Endteils bzw. Fußes einen radialen Abstand zum Gehäuse hat, wozu laut Anspruch 9 die Trennhülse in bezug auf das Schaft-Hüllrohr einspringen kann, namentlich mit einer Außendurchmesser-Stufe. Diese trägt gemäß Anspruch 10 dazu bei, daß der die Düsenspitzen halternde Schaft-Endteil zugleich die Zentrierung bewirkt.

Anspruch 11 sieht vor, daß die bzw. jede Düsenspitze an dem Schaft-Endteil form- und/oder stoffschlüssig so befestigt ist, daß sie das Werkzeug nicht berührt. Nach Anspruch 12 kann die bzw. jede Düsenspitze in einem Winkel zwischen 0° und 90° zur Achse des Materialrohrs an dem Schaft-Endteil befestigbar sein, um die bedarfsgemäß günstigste Einspritzung zu ermöglichen.

Eine besonders gute Abdichtung erzielt man laut Anspruch 13 dadurch, daß das Materialrohr auslaßseitig Dichtlippen hat, die mit ihm einstückig sein können und bei Betriebsdruck an einen Stützkragen des Schaft-Endteils gepreßt werden.

Für die Befestigung ist es günstig, die bzw. jede Düsenspitze nach Anspruch 14 innerhalb eines geteilten Formeneinsatzes anzubringen, der im Gehäuse verkeilt ist. Man kann also die Formeneinsatz-Teile seitwärts über die Spitzen schieben, um sie zuverlässig in genauer Position so zu befestigen, daß ein Maximum an Wärme bis an die Oberfläche des zu spritzenden Artikels herangeführt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: einen Längsschnitt durch eine Heißkanaldüse,
- Fig. 2: eine schematisierte Schnittansicht einer anderen Düsen-Ausführungsform,
- Fig. 3: ein Einbaubeispiel, teilweise im Schnitt,
- Fig. 4a: ein anderes Einbaubeispiel ähnlich Fig. 3 und
- Fig. 4b: eine Druntersicht, teilweise im Schnitt, entsprechend dem Düsen-Einbaubeispiel von Fig. 4a.

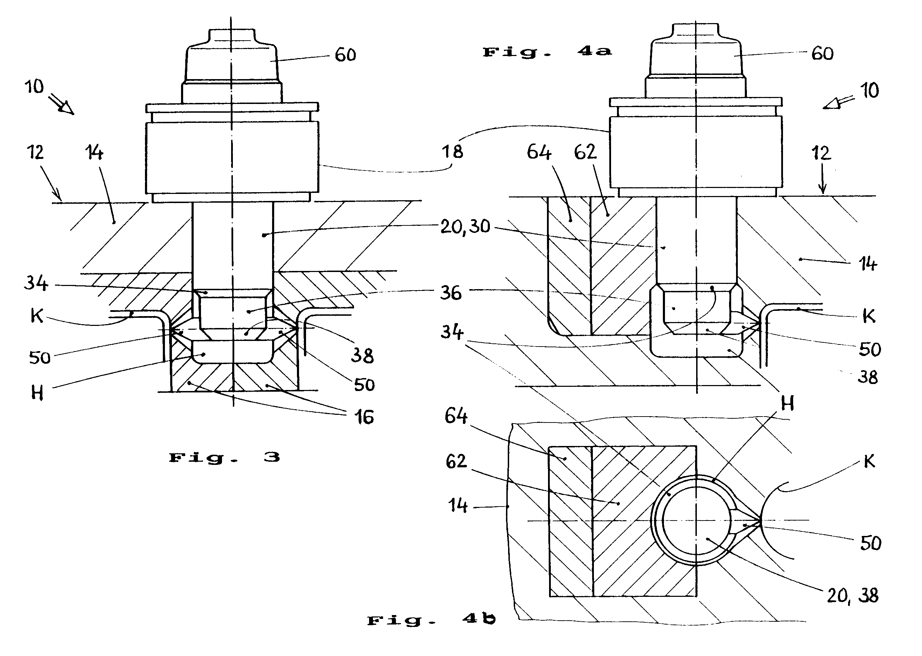

Wie beispielsweise aus Fig. 3 zu ersehen ist, wird eine allgemein mit 10 bezeichnete Heißkanaldüse zur praktischen Verwendung in ein Gehäuse 12 eingesetzt, das eine Formnestplatte 14 sowie einen - eventuell geteilten - Formeneinsatz 16 aufweist.

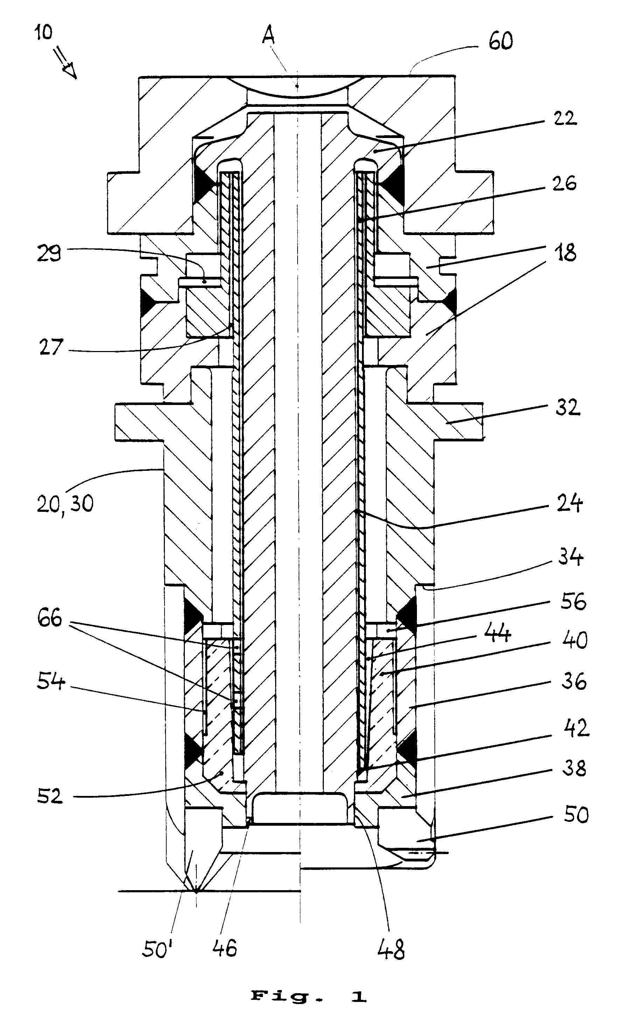

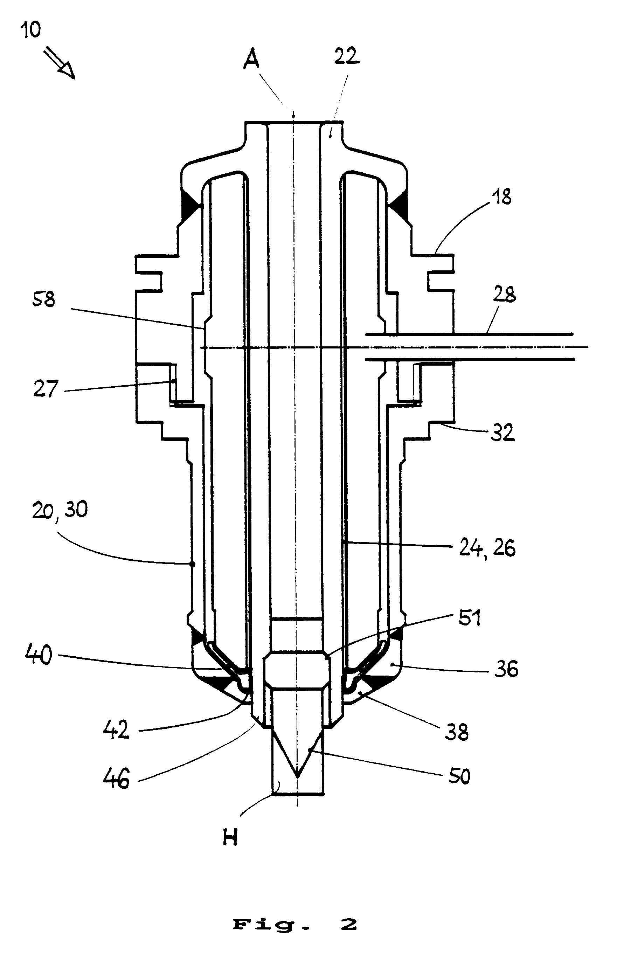

Die Heißkanaldüse 10 hat einen breiteren Flanschkörper 18, an den ein schlanker Schaft 20 anschließt. Ein außenbeheiztes Materialrohr 22 durchsetzt den Flanschkörper 18 sowie den Schaft 20 konzentrisch. Eine dünne elektrische Isolierung 24 trennt das Materialrohr 22 von einer Heizeinrichtung, die als teilweise geschlitztes Heizrohr 26 ausgebildet sein kann (Fig. 1). Weitere Isolierungen 27, 29 gewährleisten die Stromeinspeisung über einen seitlich herangeführten Elektrodenanschluß 28 (Fig. 2).

Der Schaft 20 ist mehrstufig ausgebildet. Er hat ein äußeres Hüllrohr 30 mit einem oberen Bund 32 zur Anlage an der Formnestplatte 14 und mit einer unteren Stufe 34, die als einspringender Absatz zu einem Endabschnitt von kleinerem Durchmesser führt. Im Beispiel der Fig. 1 ist die Stufe 34 rechtwinkelig abgesetzt, während Fig. 3 und 4a Hüllrohre mit schräger Stufe 34 erkennen lassen.

Das Hüllrohr 30 besteht aus hochfestem, gut wärmeleitendem Material, z.B. Werkzeugstahl. Am unteren Ende ist das Hüllrohr 30 mit einer Trennhülse 36 verschweißt, die vorzugsweise aus einem Material mit sehr niedriger Wärmeleitfähigkeit besteht, etwa aus Titan, Chrom-Nickel-Stahl, Keramik o. dgl. Daran schließt unten ein ringförmiger Fuß oder Endteil 38 an, der wiederum aus hochfestem, wärmeleitendem Werkstoff gefertigt ist.

In die unteren Schaftteile 36, 38 ist eine Wärmeleitbuchse 40 eingesetzt, die an ihrem unteren Ende 52 durch eine Schweißstelle 42 mit dem unteren Ende von Materialrohr 22 und Heizrohr 26 verbunden ist. Innen trennt ein Konusspalt 44 die Wärmeleitbuchse 40 von dem unteren Bereich des Heizrohrs 26, das dort mit Schlitzen 66 versehen ist, um den Stromwiderstand zu erhöhen und auf diese Weise die Heizleistung am unteren Ende des Materialrohrs 22 zu steigern. Ein äußerer Ringspalt 54 isoliert die Wärmeleitbuchse 40 vom Hauptteil der Trennhülse 36. Zwischen den einander benachbarten Stirnflächen der Wärmeleitbuchse 40 und des Hüllrohrs 30 sitzt ein Stützring 56, der eine mechanische Abstützung bewirkt, dank schlechter Wärmeleitung aber den Energieübergang von der Wärmeleitbuchse 40 zum Hüllrohr 30 weitestgehend einschränkt. Vorzugsweise besteht der Ring 56 wie die Trennhülse 36 aus einem Material geringer Wärmeleitfähigkeit, z.B. aus Titan, Chrom-Nickel-Stahl, Keramik o.dgl.

Am Fuß 38, der bevorzugt aus Werkzeugstahl besteht, sind Düsenspitzen 50, 50' wärmeleitend befestigt, z.B. durch Lötung. Die Düsenspitzen 50 (in Fig. 1 rechts; Fig. 3, 4a, 4b) stehen im wesentlichen rechtwinklig zur Achse A des Materialrohrs 22, welches die ganze Heißkanaldüse 10 durchsetzt und oben von einer Aufnahme bzw. Kappe 60 übergriffen ist. Die Düsenspitze 50' (links in Fig. 1) ist senkrecht ausgerichtet, d.h. parallel zur Längsachse A.

Im Ausführungsbeispiel der Fig. 2 sind bei allgemein ähnlichem Aufbau gleichartige Elemente mit denselben Bezugszahlen gekennzeichnet wie in Fig. 1. Auch hier kann eine (in Fig. 2 weggelassene) Kappe 60 auf das Materialrohr 22 aufgesetzt werden, an dessen unterem Ende eine Düsenspitze 50 in Richtung der Achse A angeordnet ist. Sie reicht in einen Hohlraum H des (ebenfalls hier nicht gezeichneten) Formeneinsatzes 16.

Etwa in Höhe der Schweißstelle 42 hat die Düsenspitze 50 eine äußere Erweiterung 51, die formschlüssig in das untere Ende des Materialrohrs 22 eingepaßt ist. Mit diesem können Dichtlippen 46 einstückig sein, die den Körper der Düsenspitze 50 im oberen Haltebereich umschließen. Im unteren Hauptbereich hat die Düsenspitze 50 jedoch keine Berührung mit den das Materialrohr 22 fortsetzenden Dichtlippen 46. Letztere durchsetzen außerdem das untere Ende der Wärmeleitbuchse 40 sowie den Schaftfuß 38 konzentrisch, so daß Ausgleichs-Gleitbewegungen zwischen den sich berührenden Elementteilen 38, 40 (bzw. 42) und 46 unbehindert möglich sind, die infolge thermischer Dehnung und Schrumpfung bei Änderung des Wärmegleichgewichts und auch unter dem hohen Spritzdruck von beispielsweise 1.000 bar stattfinden können, der die Dichtung 46 fest auf den Stützkragen preßt.

Zum (hier gleichfalls nicht dargestellten) Gehäuse 12 hin ist wiederum die thermische Unterbrechung durch die Trennhülse 36 zwischen den wärmeleitenden Schaftteilen vorgesehen, d. h. zwischen dem Fußring 38 und dem Hüllrohr 30. Durch diese ebenso einfache wie wirksame Isoliermaßnahme ist im Betrieb eine günstige Leistungsbilanz gewährleistet.

Einbaubeispiele gehen aus den Fig. 3a, 4a, 4b hervor. Man erkennt, daß der Schaft 20 mit dem Hüllrohr 30 in die Formnestplatte 14 des Gehäuses 12 eingepaßt ist. Das Hüllrohr 30 ragt im Beispiel der Fig. 3 noch mit dem vollen Außendurchmesser in den Formeneinsatz 16, springt dann aber mit der Stufe 34 so ein, daß die schmalere Trennhülse 36 im Inneren eines Hohlraums H freiliegt. Die Stufe 34 bzw. der Fuß 38 zentriert den Schaft 20 und damit die Heißkanaldüse 10, so daß der zu fertigende Kunststoff-Artikel K exakt die benötigte Gestalt bzw. Wandstärke erhält. Mit mehreren Spitzen 50 ist es möglich, entweder einen Artikel K an verschiedenen Stellen anzuspritzen oder das gleichzeitige Anspritzen mehrerer, voneinander getrennter Artikel zu bewirken. Im Beispiel der Fig. 4a, 4b ist nur eine Düsenspitze 50 vorgesehen, und der Schaft 20 ist mit seinem Hüllrohr 30 durch ein Füllstück bzw. einen Rahmen 62 positioniert, der seinerseits mit einem Keil 64 in der Platte 14 festgelegt ist. Nicht dargestellt sind Einbaubeispiele, bei denen die bzw. jede Düsenspitze 50 in einem Winkel zur Achse A steht, der durch entsprechende Gestaltung der Aufnahmen im Fuß 38 beliebig im Bereich zwischen 0° und 90° oder auch darüber liegen kann.

Die Heizeinrichtung 26 kann mit Nieder- oder mit Netzspannung betrieben werden. Im letzteren Falle erfolgt die Stromrückführung (hier nicht dargestellt) innerhalb der Heizeinrichtung, während sie im Niederspannungsbetrieb direkt über das Materialrohr 22 und den Flanschkörper 18 an das Werkzeug (Gehäuse 12) erfolgt.

Bei den Ausführungsformen gemäß Fig. 1, 3, 4a, 4b ergibt sich ein weiterer wärmetechnischer Vorteil. Das Materialrohr 22 erfährt durch das Aufheizen auf Verarbeitungstemperatur eine Längsdehnung. Der Schaft 20 mit seinen Teilen 30, 36, 38 behält hingegen dank guter Wärmetrennung eine wesentlich niedrigere Temperatur. Mithin wird eine Längenänderung der Spitzen 50, 50' durch das Aufheizen weitgehend vermieden. Dies ist namentlich in Fällen kleiner Angußpunkt-Durchmesser wichtig, weil dann die genaue Lage der betreffenden Düsenspitze(n) am Angußpunkt im Werkzeug 12 herstellbar ist, ohne daß die Düsenlänge besonders angepaßt werden müßte.

Wenn das Anspritzen durch eine werkzeugseitig vorhandene Wand seitlich an einen Artikel K erfolgt, wird immer ein Anteil kalten Materials in den zu fertigenden Kunststoff-Artikel K mit hineingetragen, was zu Fehlstellen im Produkt führt. Um dem zu begegnen, wird die Wärme erfindungsgemäß bis an die Oberfläche des bzw. jedes zu entformenden Artikels K geleitet. Die bereits beschriebene Düse 10 (oder eine andere Heißkanaldüse) wird mit ihren Düsenspitzen 50, 50' im Werkzeug 12 jeweils auf die exakt passende Höhenposition eingestellt. Die Düsenspitzen 50, 50' berühren das Werkzeug 12 an keiner Stelle. Allenfalls über den mit der thermoplastischen Masse gefüllten Hohlraum H fließt Wärme unkontrolliert an die Werkzeugwandung ab. Die metallische Leitung durch das Hüllrohr 30 des Schafts 20 wird jedoch durch die Isoliermaßnahmen weitestgehend herabgesetzt, nämlich durch die Spalte 44, 54, den schlecht leitenden Stützring 56 und die Trennhülse 36. Das ausströmende Material wird nicht - wie zum Teil herkömmlich - durch Bohrungen, Kanäle o.dgl. in den Schaft-Endbereich geleitet.

Die Erfindung ist nicht auf die dargestellten Ausführungsformen beschränkt. Man erkennt jedoch daraus, daß sich bei einer Heißkanaldüse 10 mit seitlichen elektrischen Anschlüssen 28 ein breiterer Flanschkörper 18 als schmalerer, von einem außenbeheizten Materialrohr 22 durchsetzter Schaft 20 fortsetzt, der thermisch mehrstufig ausgebildet ist. In seinen hochfesten Fuß 38 ist wenigstens eine Düsenspitze 50, 50' wärmeleitend einsetzbar; an eine Trennhülse 36 des Schafts 20 schließt zum Gehäuse 12 hin ein hochfestes, gut wärmeleitendes Hüllrohr 30 mit einer einspringenden Außendurchmesser-Stufe 34 an. Das Heizrohr 26 ist unten mit einer metallischen Buchse 40 wärmeleitend verbunden, die oben sowohl von der Trennhülse 36 als auch vom Heizrohr 26 durch Luftspalte 54, 44 wärmeisoliert ist. Zwischen Stirnflächen der Wärmeleitbuchse 40 und der Trennhülse 36 ist ein schlecht wärmeleitender Stützring 56 angeordnet. Die Düsenspitzen 50, 50' sind in einem Winkel zwischen 0° und 90° zur Schaft-Achse A an dem Fuß 38 form- und/oder stoffschlüssig befestigt. Dieser ist an einem im Gehäuse 12 verkeilten Formeneinsatz 16 zentriert, der geteilt sein kann.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichen-Liste

- A: (Längs-) Achse
- H: Hohlraum
- K: Kunststoff-Artikel
- 10: Heißkanaldüse
- 12: Gehäuse
- 14: Formnestplatte
- 16: Formeneinsatz
- 18: Flanschkörper
- 20: Schaft
- 22: Materialrohr
- 24: Isolierung
- 26: Heizrohr
- 27: Isolierung
- 28: Elektrodenanschluß
- 29: Isolierscheibe
- 30: Hüllrohr
- 32: Bund
- 34: Stufe/Absatz
- 36: Trennhülse
- 38: Fuß(ring)/Endteil
- 40: Wärmeleitbuchse
- 42: Schweißstelle
- 44: Konusspalt
- 46: Dichtlippen
- 48: Stützkragen
- 50, 50': Düsenspitze
- 51: Erweiterung
- 52: unterer Teil
- 54: Ringspalt
- 56: Abstützung/Stützring
- 58: Stromeinspeisering
- 60: Aufnahme/Kappe
- 62: Rahmen/Füllstück
- 64: Keil
- 66: Schlitze

## Patentansprüche

1. Heißkanaldüse (10) zur Verwendung in einer Spritzgießvorrichtung, deren Gehäuse (12) eine Formnestplatte (14) sowie einen Formeneinsatz (16) aufweist, bestehend aus einem mit elektrischen Anschlüssen (28) versehenen breiteren Flanschkörper (18) und einem schmaleren Schaft (20), welcher im Gehäuse (12) gehaltert ist, in den Formeneinsatz (16) ragt und mit wenigstens einer Düsenspitze (50, 50') versehen ist, die in einem Winkel zur Achse (A) eines Flanschkörper (18) und Schaft (20) durchsetzenden, außenbeheizten Materialrohrs (22) nach außen gerichtet ist, wobei der Schaft (20) einen hochfesten Endteil (38) aufweist, in den die bzw. jede Düsenspitze (50, 50') wärmeleitend einsetzbar ist, dadurch **gekennzeichnet**, daß der Endteil (38) von einem thermischen Trennkörper (36) fortgesetzt ist, an welchen wiederum ein hochfestes, gut wärmeleitendes Bauelement (30) anschließt.

2. Heißkanaldüse nach Anspruch 1, dadurch **gekennzeichnet**, daß das Materialrohr (22) gegebenenfalls unter Zwischenlage einer dünnen elektrischen Isolierung (24) von einer Heizeinrichtung (26) dicht umschlossen ist und daß das untere Ende der Heizeinrichtung (26) mit einem Wärmeleitelement (40) wärmeleitend verbunden ist.

3. Heißkanaldüse nach Anspruch 2, dadurch **gekennzeichnet**, daß der Schaft (20) ein Hüllrohr (30), eine damit verschweißte Trennhülse (36) und einen insbesondere ringförmigen Fuß (38) aufweist, an dem die bzw. jede Düsenspitze (50, 50') befestigbar ist.

4. Heißkanaldüse nach Anspruch 2 und 3, dadurch **gekennzeichnet**, daß das Wärmeleitelement (40) eine metallische Buchse ist, deren unterer Teil (52) an das untere Ende des Materialrohrs (22) sowie der Heizeinrichtung (26) formschlüssig anschließt und seinerseits vom Fußring (38) formschlüssig übergriffen wird.

5. Heißkanaldüse nach einem der Ansprüche 2 bis 4, dadurch **gekennzeichnet**, daß das Wärmeleitelement (40) in seinem oberen Bereich von dem thermischen Trennkörper (36) und von der Heizeinrichtung (26) wärmeisoliert ist, insbesondere durch Luftspalte (54, 44).

6. Heißkanaldüse nach Anspruch 5, dadurch **gekennzeichnet**, daß vom unteren Ende (52) des Wärmeleitelements (40) ausgehend wenigstens ein sich nach oben erweiternder Konusspalt (44) vorhanden ist.

7. Heißkanaldüse nach einem der Ansprüche 3 bis 6, dadurch **gekennzeichnet**, daß zwischen dem oberen Ende des Wärmeleitelements (40) und dem thermischen Trennkörper (36) zumindest einer höchstens mäßig wärmeleitenden Ringabstützung (56) vorhanden ist, die zwischen Stirnflächen des Wärmeleitelements (40) und des thermischen Trennkörpers (36) sitzt.

8. Heißkanaldüse nach einem der Ansprüche 1 bis 7, dadurch **gekennzeichnet**, daß der Schaft (20) zumindest im Bereich seines Endteils bzw. Fußes (38) einen radialen Abstand zum Gehäuse (12) hat.

9. Heißkanaldüse nach einem der Ansprüche 3 bis 8, dadurch **gekennzeichnet**, daß die Trennhülse (36) des Schafts (20) in bezug auf sein Hüllrohr (30) einspringt, namentlich mit einer Außendurchmesser-Stufe (34).

10. Heißkanaldüse nach Anspruch 9, dadurch **gekennzeichnet**, daß der Schaft-Endteil (38) die Düsenspitzen (50, 50') haltert und zugleich zentriert, z.B. mittels der Außendurchmesser-Stufe (34).

11. Heißkanaldüse nach einem der Ansprüche 1 bis 10, dadurch **gekennzeichnet**, daß die bzw. jede Düsenspitze (50, 50') an dem Schaft-Endteil (38) form- und/oder stoffschlüssig so befestigt ist, daß sie das Werkzeug (12) nicht berührt.

12. Heißkanaldüse nach einem der Ansprüche 1 bis 11, dadurch **gekennzeichnet**, daß die bzw. jede Düsenspitze (50, 50') in einem Winkel zwischen 0° und 90° zur Achse (A) des Materialrohrs (22) an dem Schaft-Endteil (38) befestigbar ist.

13. Heißkanaldüse nach wenigstens einem der Ansprüche 1 bis 12, dadurch **gekennzeichnet**, daß das Materialrohr (22) auslaßseitig Dichtlippen (46) hat, die an einem Stützkragen (48) des Schaft-Endteils (38) zur Anlage kommen.

14. Heißkanaldüse nach einem der Ansprüche 11 bis 13, dadurch **gekennzeichnet**, daß die bzw. jede Düsenspitze (50, 50') innerhalb eines geteilten Formeinsatzes (16) sitzt, der im Gehäuse (12) verkeilt ist.

## Claims

1. A hot runner nozzle (10) for use in an injection molding machine having a casing (12) with a mold cavity plate (14) and a mold insert (16), including a broad flange body (18) provided with electrode terminals (28) and a slender shaft (20) which is retained in the casing (12), extends into the mold insert (16) and comprises at least one nozzle tip (50, 50') that is directed outwardly at an angle to the axis (A) of a flow tube (22) which is heated from its outside and extends through the flange body (18) and the shaft (20) which latter includes a high-strength foot portion (38) adapted to heat-conductively receive the nozzle tips (50, 50'), wherein the shaft (20) is continued by a thermally separating body (36) that, in turn, is joined to a high-strength heat-conducting component (40).

2. Hot runner nozzle according to claim 1, wherein the flow tube (22) and possibly an intermediate thin electrical insulation is tightly enclosed by heating means (26) the lower end of which is heat-conductively connected to the heat-conducting component (40).

3. Hot runner nozzle according to claim 2, wherein the shaft (20) includes an envelope tube (30), a separating sleeve (36) welded thereto and a ring-shaped foot portion (38) to which the nozzle tip or each of the nozzle tips (50, 50') is attached.

4. Hot runner nozzle according to claims 2 and 3, wherein the heat-conducting component (40) is a metallic bush the lower portion (52) of which is form-fitted to the lower ends of the flow tube (22) as well as the heating means (26) and which, in turn, is grasped by the shaft foot portion (38).

5. Hot runner nozzle according to any one of claims 2 to 4, wherein the upper portion of the heat-conducting component (40) and the thermally separating body (36) as well as the heating means (26) are thermally insulated, in particular by air gaps.

6. Hot runner nozzle according to claim 5, wherin at least one conical gap (44) widening upwardly issues from the lower portion (52) of the heat-conducting component (40).

7. Hot runner nozzle according to any one of claims 3 to 6, wherein between the upper portion of the heat-conducting component (40) and the thermally separating body (36), there is at least one supporting ring (56) of moderate or low heat conductivity so as to be seated between faces of the heat-conducting component (40) and of the thermally separating body (36).

8. Hot runner nozzle according any one of claims 1 to 7, wherein the shaft (20) is, at least at its end or foot portion (38), radially spaced from the casing (12).

9. Hot runner nozzle according to any one of claims 3 to 8, wherein the separating sleeve (36) of the shaft (20) is re-entrant relative to its envelope tube (30), especially with a shoulder (34) at the outer diameter.

10. Hot runner nozzle according to claim 9, wherein the nozzle tips (50, 50') are retained and simultaneously centered by the shaft foot portion (38), especially at the outer diameter shoulder (34).

11. Hot runner nozzle according to any one of claims 1 to 10, wherein the nozzle tip or each of the nozzle tips (50, 50') is positively attached and/or bonded to the shaft foot portion (38) free of contact to the tool (12).

12. Hot runner nozzle according to any one of claims 1 to 11, wherein the nozzle tip or each of the nozzle tips (50, 50') is adapted to be attached to the shaft foot portion (38) at an angle between 0° and 90° relative to the axis (A) of the flow tube (22).

13. Hot runner nozzle according to at least one of claims 1 to 12, wherein the flow tube (22) includes at its outlet side sealing lips (46) engaging a supporting collar (48) of the shaft foot portion (38).

14. Hot runner nozzle according to any one of claims 1 to 13, wherein the nozzle tip or each of the nozzle tips (50, 50') is seated within a divided mold insert (16) wedged in the casing (12).

## Revendications

1. Filière de moulage à canaux chauds (10) à utiliser sur un dispositif de moulage par injection, dont le boîtier (12) a une plaque d'empreinte du moule (14) ainsi qu'un noyau de moule (16), consistant en un corps à bride (18) plus large pourvu de connexions électriques (28) et en une tige (20) plus étroite fixée dans le boîtier (12), allant jusque dans le noyau du moule (16) et pourvue d'au moins une tête de filière (50, 50'), laquelle est dirigée vers l'extérieur angulairement par rapport à l'axe (A) d'une conduite matériau (22) chauffée de l'extérieur et traversant le corps à bride (18) et la tige (20), cette tige (20) ayant une partie terminale (38) hautement résistante, dans laquelle peut être placée la ou chaque tête de filière (50, 50') de manière à conduire la chaleur, caractérisée en ce que la partie terminale (38) est prolongée par un corps de séparation thermique (36), auquel se rattache à son tour un élément de construction (30) hautement résistant et bon conducteur de la chaleur.

2. Filière de moulage à canaux chauds selon la revendication 1, caractérisée en ce que la conduite de matériau (22) est enveloppée étroitement par un dispositif de chauffage (26), avec une intercalation éventuelle d'une mince isolation électrique (24), et en ce que l'extrémité inférieure du dispositif de chauffage (26) est reliée thermoconductiblement à un élément conducteur de chaleur (40).

3. Filière de moulage à canaux chauds selon la revendication 2, caractérisée en ce que la tige (20) a un tube de gainage (30), une douille de séparation (36) soudée à ce dernier, et un pied (38) notamment en forme d'anneau, sur lequel la ou chaque tête de filière (50, 50') peut être fixée.

4. Filière de moulage à canaux chauds selon la revendication 2 et 3, caractérisée en ce que l'élément thermoconducteur (40) est une douille métallique, dont la partie inférieure (52) se rattache solidairement de forme à l'extrémité inférieure de la conduite de matériau (22) et du dipositif de chauffage (26) et qui est elle-même entourée solidairement de forme par le pied annulaire (38).

5. Filière de moulage à canaux chauds selon une des revendications 2 à 4, caractérisée en ce que l'élément thermoconducteur (40), dans son secteur supérieur, est isolé thermiquement du corps de séparation thermique (36) et du dispositif de chauffage (26), notamment par des fentes d'air (54, 44).

6. Filière de moulage à canaux chauds selon la revendication 5, caractérisée en ce qu'il y a au moins une fente conique (44) partant de l'extrémité inférieure (52) de l'élément thermoconducteur (40) et s'élargissant vers le haut.

7. Filière de moulage à canaux chauds selon une des revendications 3 à 6, caractérisée en ce qu'il y a entre l'extrémité supérieure de l'élément thermoconducteur (40) et le corps de séparation thermique (36) au moins un appui par bague (56) tout au plus faiblement thermoconductible, qui est placé entre des surfaces frontales de l'élément thermoconducteur (40) et du corps de séparation thermique (36).

8. Filière de moulage à canaux chauds selon une des revendications 1 à 7, caractérisée en ce que la tige (20) a une distance radiale par rapport au boîtier (12), au moins dans le secteur de sa partie terminale ou pied (38).

9. Filière de moulage à canaux chauds selon une des revendication 3 à 8, caractérisée en ce que la douille de séparation (36) de la tige (20) est en retrait par rapport à son tube de gainage (30), notamment avec un étagement du diamètre extérieur (34).

10. Filière de moulage à canaux chauds selon la revendication 9, caractérisée en ce que la partie terminale (38) de la tige retient et centre en même temps les têtes de filière (50, 50'), par exemple moyennant l'étagement du diamètre extérieur (34).

11. Filière de moulage à canaux chauds selon une des revendications 1 à 10, caractérisée en ce que la ou chaque tête de filière (50, 50') est fixée solidairement de forme et/ou de matière à la partie terminale (38) de la tige de manière à ne pas toucher l'outil (12).

12. Filière de moulage à canaux chauds selon une des revendications 1 à 11, caractérisée en ce que la ou chaque tête de filière (50, 50') peut être fixée sur la partie terminale (38) de la tige en un angle entre 0° et 90° par rapport à l'axe (A) de la conduite de matériau (22).

13. Filière de moulage à canaux chauds selon au moins une des revendications 1 à 12, caractérisée en ce que la conduite de matériau (22) a sur son côté de sortie des lèvres d'étanchéité (46) touchant un col d'appui (48) de la partie terminale (38) de la tige.

14. Filière de moulage à canaux chauds selon une des revendications 11 à 13, caractérisée en ce que la ou chaque tête de filière (50, 50') est placée à l'intérieur d'un noyau de moule partagé (16), qui est coincé dans le boîtier (12).
